# EUROPÄISCHE PATENTSCHRIFT

(11) **EP 3 069 444 B1**
(45) Veröffentlichungstag und Bekanntmachung des Hinweises auf die Patenterteilung: **20.03.2019**
(21) Anmeldenummer: 14792831.1
(22) Anmeldetag: 03.11.2014
(51) Int. Cl.: H02P 29/02, H02H 5/10

(54) **VERFAHREN ZUM BETREIBEN EINER ELEKTRISCHEN MASCHINE**
METHOD FOR OPERATING AN ELECTRIC MACHINE
PROCÉDÉ DESTINÉ AU FONCTIONNEMENT D'UNE MACHINE ÉLECTRIQUE

(30) Priorität: 15.11.2013 DE 102013223335; 13.02.2014 DE 102014202602
(43) Veröffentlichungstag der Anmeldung: 21.09.2016
(73) Patentinhaber: Robert Bosch GmbH, 70442 Stuttgart (DE); SEG Automotive Germany GmbH, 70499 Stuttgart (DE)
(72) Erfinder: ESCHENHAGEN, Marc, 71696 Moeglingen (DE)
(86) Internationale Anmeldenummer: PCT/EP2014/073571
(87) Internationale Veröffentlichungsnummer: WO 2015/071127

(56) Entgegenhaltungen:
- DE-A1- 19 638 478
- DE-A1-102010 030 083
- DE-A1-102011 014 561
- DE-A1-102011 051 642
- DE-A1-102012 215 542

## Beschreibung

Die vorliegende Erfindung betrifft ein Verfahren zum Betreiben einer elektrischen Maschine.

### Stand der Technik

Elektrische Antriebe weisen im Wesentlichen zwei Komponenten auf. Einerseits weist der elektrische Antrieb eine elektrische Maschine auf, welche mechanische Energie in elektrische Energie oder umgekehrt wandelt (elektromechanischer Wandler). Die elektrische Maschine kann dabei sowohl generatorisch als ein Generator, als auch motorisch als ein (Elektro-)Motor betrieben werden. Andererseits weist der elektrische Antrieb einen Stromrichter bzw. eine Wechsel-/Gleichrichterschaltung auf. Der Stromrichter wandelt elektrische Wechselspannung in elektrische Gleichspannung oder umgekehrt (elektrischer Wandler). Ein derartiger Stromrichter weist zumeist elektrische Schalter, zumeist Leistungshalbleiter wie MOSFETs, auf, und wird von einer Logikschaltung angesteuert. Stromrichter und Logikschaltung werden zusammen auch als Inverter bezeichnet.

Elektrische Maschinen sind üblicherweise konstruktiv bedingt über ihr Gehäuse leitend und dauerhaft mit dem Motorblock der Brennkraftmaschine verbunden. Der Motorblock stellt die elektrische Masse für die elektrische Maschine dar (Motormasse). Eine Erregerspule der elektrischen Maschine, die zumeist in ein Bordnetz eingebunden ist, stellt eine Verbindung zwischen spannungsseitigem und masseseitigem Anschluss der elektrischen Maschine her. Gleichzeitig ist ein Energiespeicher, insbesondere eine Batterie oder ein entsprechender Kondensator, mit seinem positiven Pol in ein Bordnetz eingebunden und mit seinem negativen Pol an eine Karosserie des Kraftfahrzeugs als Masse angeschlossen. Auch Verbraucher in dem Bordnetz sind über die Karosserie geerdet (Karosseriemasse).

Die Motormasse stellt somit ein Bezugsmassepotential für den elektrischen Antrieb dar. Die Karosseriemasse stellt ein Referenzmassepotential für das Bordnetz dar. Um Motorblock und Karosserie auf dasselbe Massepotential zu beziehen, werden Motorblock und Karosserie über eine Masseleitung bzw. ein Masseband elektrisch verbunden. Im Falle einer Unterbrechung dieser Masseleitung bzw. eines Abrisses dieses Massebands (im Folgenden als Massebandabriss bezeichnet) ist der negative Bezugspunkt des elektrischen Antriebs undefiniert. Das Bezugsmassepotential kann somit unkontrolliert ansteigen oder absinken.

Ein Massebandabriss kann zu einer Beschädigung des elektrischen Antriebs führen. Tritt ein Massenbandabriss in einem generatorischen Betrieb des elektrischen Antriebs auf, kann es zu einer Überspannung kommen. Ein Massenbandabriss während eines motorischen Betriebs des elektrischen Antriebs kann zu einer kritischen Spannung der Logikschaltung führen, was einen Reset und einen Verlust der Kontrolle über den elektrischen Antrieb zufolge haben kann. Die Logikschaltung muss ständig mit Spannung versorgt sein. Verliert die Logikschaltung ihre Energieversorgung, kann es zu einer fehlerhaften oder gar zu einer zerstörenden Funktionalität der Logikschaltung kommen. Im besonderen Fall Massebandabrisses ist es der Logikschaltung nicht möglich, ihre Funktionalität zu erreichen.

Es ist daher wünschenswert eine Möglichkeit bereitzustellen, um einen elektrischen Antrieb im Falle eines Massebandabrisses in einen sicheren Betriebszustand zu überführen.

### Offenbarung der Erfindung

In der DE 10 2011 051 642 A1 ist eine Gleichrichtereinheit offenbart, die eine Wechselspannung, die über jede von zumindest zweiphasigen Starterwicklungen induziert wird, gleichrichtet. Eine Einschalteinheit überwacht die Ausgangsspannung der Gleichrichtereinheit und schaltet ein Schaltelement für ein niedrigseitiges Gleichrichterelemente für zumindest eine der zumindest zweiphasigen Starterwicklungen ein, wenn die Ausgangsspannung wegen eines Lastabwurfs eine erste Schwellenspannung überschreitet.

Erfindungsgemäß wird ein Verfahren zum Betreiben einer elektrischen Maschine mit den Merkmalen des Patentanspruchs 1 vorgeschlagen. Vorteilhafte Ausgestaltungen sind Gegenstand der Unteransprüche sowie der nachfolgenden Beschreibung.

Mittels einer Logikschaltung wird die elektrische Maschine, die sowohl als ein Motor als auch als ein Generator betrieben werden kann, angesteuert. Die Logikschaltung steuert dabei insbesondere einen Stromrichter der elektrischen Maschine an, der elektrische Schalter, insbesondere Halbleiterschalter, weiter insbesondere MOSFETs, aufweist, welche Phasen der elektrischen Maschine nach Maßgabe eines motorischen oder generatorischen Schaltschemas mit einem Bordnetz bzw. einer Energiequelle eines Kraftfahrzeugs verbinden. Der Stromrichter der elektrischen Maschine weist einerseits Gleichspannungsanschlüsse für das Bordnetz und andererseits Wechselspannungsanschlüsse für die elektrischen Phasen der elektrischen Maschine auf. Die Logikschaltung selbst weist üblicherweise ein ASIC o.ä. auf.

Der elektrische Antrieb, hier insbesondere ein Gleichspannungsanschluss des Stromrichters, ist mit einem Bezugsmassepotential elektrisch verbunden. Insbesondere ist der elektrische Antrieb dabei mit einem Motorblock der Brennkraftmaschine elektrisch verbunden. Ein Motormassepotential bildet somit insbesondere das Bezugsmassepotential. Das Bezugsmassepotential ist über ein Masseband bzw. eine Masseleitung mit einem Referenzmassepotential elektrisch verbunden. Die Masseleitung bzw. das Masseband ist dabei insbesondere eine elektrische Verbindung zwischen dem Motorblock der Brennkraftmaschine und einer Karosserie eines Fahrzeugs, in welchem die Brennkraftmaschine angeordnet ist. Ein Karosseriemassepotential bildet somit das Referenzmassepotential.

Erfindungsgemäß wird eine Massedifferenzspannung zwischen dem Bezugsmassepotential und dem Referenzmassepotential überwacht. Somit kann insbesondere überwacht werden, ob ein Massebandabriss vorliegt, beispielsweise wenn das Masseband unterbrochen wird bzw. abreißt. Ein Erreichen eines oberen bzw. eines unteren Grenzwerts der Massedifferenzspannung kann auf einen Massebandabriss zurückgeführt werden. In diesem Fall wird eine reguläre Ansteuerung, mittels welcher der elektrische Antrieb während eines regulären Betriebs angesteuert wird, deaktiviert. Stattdessen wird die Logikschaltung und somit die die elektrische Maschine in einen speziellen Notfall-Betrieb gebracht.

Der elektrische Antrieb wird somit im Falle eines Massebandabrisses in einen sicheren Betriebszustand überführt. Durch den speziellen Notfall-Betrieb wird das Bezugsmassepotential aktiv stabilisiert. Es wird somit gewährleistet, dass das Bezugsmassepotential im Falle eines Massebandabrisses weder unkontrolliert ansteigt noch unkontrolliert absinkt.

Erreicht bzw. überschreitet die Massedifferenzspannung einen oberen Grenzwert, wird die elektrische Maschine daraufhin in einem stromabgebenden Betriebszustand betrieben. Ein Überschreiten des oberen Grenzwerts bedeutet, dass das Bezugsmassepotential eine obere Schwelle erreicht und zu hoch bzw. zu positiv ist. Das Bezugsmassepotential muss somit abgebaut werden.

Mit zunehmendem Bezugsmassepotential wird der Wert des Bezugsmassepotentials im Vergleich zu dem Wert des Referenzpotentials zunehmend positiver. Der Wert des Bezugsmassepotentials nähert sich dabei einem Wert eines Versorgungspotentials an. Dieses Versorgungspotential liegt dabei insbesondere an einem Bordnetz an, mit welchem der elektrische Antrieb verbunden ist.

Der stromabgebende Betriebszustand entspricht dabei im Wesentlichen einem generatorischen Betriebszustand der elektrischen Maschine.

Erreicht bzw. unterschreitet die Massedifferenzspannung einen unteren Grenzwert, wird die elektrische Maschine daraufhin in einem nicht-stromabgebenden Betriebszustand betrieben. Ein Unterschreiten des unteren Grenzwerts bedeutet, dass das Bezugsmassepotential eine untere Schwelle erreicht und zu niedrig bzw. zu negativ ist. Das Bezugsmassepotential muss somit aufgebaut werden.

Mit abnehmendem Bezugsmassepotential nähert sich der Wert des Bezugsmassepotentials dem Wert des Referenzpotentials zunehmend an. Der Wert des Bezugsmassepotentials entfernt sich dabei von dem Wert des Versorgungspotentials.

Der nicht-stromabgebenden Betriebszustand entspricht dabei im übertragenen Sinne einem motorischen Betriebszustand der elektrischen Maschine. Allerdings muss dies nicht notwendigerweise bedeuten, dass sich ein Läufer der elektrischen Maschine tatsächlich bewegt. In dem nicht-stromabgebenden Betriebszustand wird in der elektrischen Maschine dabei im Gegensatz zu dem generatorischen bzw. stromabgebenden Betriebszustand keine elektrische Energie erzeugt bzw. abgegeben (im übertragenen Sinne analog zu dem motorischen Betriebszustand). In dem nicht-stromabgebenden Betriebszustand wird insbesondere ein Stromfluss zwischen den Gleichspannungsanschlüssen durch die elektrische Maschine unterbunden. Somit kann kein Strom aus der elektrischen Maschine herausfließen, bzw. es kann kein Strom die elektrische Maschine "verlassen".

Der Wert des Bezugsmassepotentials ist hauptsächlich von einem Ladezustand eines Zwischenkreiskondensators abhängig. Dieser Zwischenkreiskondensator ist dabei insbesondere parallel zu der Logikschaltung und weiter insbesondere parallel zu der elektrischen Maschine geschaltet. Weiterhin ist der Zwischenkreiskondensator mit dem Bezugsmassepotentials, insbesondere dem Motorblock der Brennkraftmaschine, elektrisch verbunden. Dieser Ladezustand ist insbesondere abhängig von einem Strom durch die Logikschaltung. Der Ladezustand kann auch von Strömen durch weitere Komponenten des elektrischen Antriebs abhängig sein, beispielsweise Ströme eines Steuergeräts, eines Feldstellers und/oder einer Motorbrücke. Je nachdem wie die Ströme durch diese Komponenten des elektrischen Antriebs gerichtet sind, wird der Zwischenkreiskondensator geladen oder entladen. Diese Ströme führen somit zu einer Veränderung des Bezugsmassepotentials. Durch die erfindungsgemäße Ansteuerung der elektrischen Maschine in dem stromabgebenden bzw. nicht-stromabgebenden Betriebsmodus kann der Zwischenkreiskondensator gezielt geladen und entladen werden. Somit kann das Bezugsmassepotential aktiv verringert und erhöht werden.

Die Erfindung nutzt somit die bereits vorhandenen Bauelemente, um den Fehlerfall eines Massebandabrisses zu kompensieren und einer Gefährdung des elektrischen Antriebs aktiv entgegenzuwirken. Es sind dabei keine zusätzlichen Komponenten oder Umbaumaßnahmen erforderlich. Des Weiteren können durch die Erfindung auch aufwendige Schutzmaßnahmen eingespart werden. Lediglich für eine Sensierung des Massebandabrisses sind möglicherweise Änderungen an den vorhandenen Bauelementen oder zusätzliche Bauelemente nötig, nicht jedoch für die Stabilisierung des Bezugsmassepotentials an sich.

In dem stromabgebenden Betriebszustand erzeugt die elektrische Maschine elektrische Energie. Im Falle eines Massebandabrisses lädt die elektrische Maschine dadurch den Zwischenkreiskondensator auf. Weiterhin kann die erzeugte elektrische Energie die Logikschaltung somit mit elektrischer Energie versorgt werden. Somit wird das Motormassepotential abgebaut und die Massedifferenzspannung wird reduziert. Das Motormassepotential wird somit verringert in Bezug zu dem Versorgungspotential. Das Motormassepotential nähert sich somit dem Referenzmassepotential an. Bevor jedoch die Massedifferenzspannung zu klein wird und eine zu hohe, kritische Spannung an der Logikschaltung anliegt, wechselt der elektrische Antrieb in den nicht-stromabgebenden Betriebszustand.

In dem nicht-stromabgebenden Betriebszustand wird hingegen keine elektrische Energie erzeugt. Der Zwischenkreiskondensator, der in dem stromabgebenden Betriebszustand aufgeladen wurde, kann sich in dem nicht-stromabgebenden Betriebszustand nun entladen. Insbesondere entlädt sich der Zwischenkreiskondensator über die Logikschaltung und versorgt diese somit mit elektrischer Energie.

Wie erwähnt, ist das Bezugsmassepotential abhängig von dem Ladezustand des Zwischenkreiskondensators, welcher wiederum spannungsabhängig ist. Da der Zwischenkreiskondensator die Logikschaltung in dem nicht-stromabgebenden Betriebszustand mit Strom versorgt, sinkt die Spannung an dem Zwischenkreiskondensator und somit dessen Ladungszustand. Somit steigt andererseits das Bezugsmassepotential in Richtung des Versorgungspotentials an. Das Bezugsmassepotential steigt somit durch den Strom an, welcher durch die Logikschaltung fließt. Das Bezugsmassepotential kann aktiv aufgebaut werden und die Massedifferenzspannung erhöht sich.

Bevor die Massedifferenzspannung zu hoch wird bzw. bevor sich der Zwischenkreiskondensator komplett entladen hat und somit die Logikschaltung nicht mehr mit elektrischer Energie versorgt wird, wechselt der elektrische Antrieb wieder in den stromabgebenden Betriebszustand. Somit kann verhindert werden, dass ein Reset der Logikschaltung erfolgt und dass es zu einem Verlust jeglicher Kontrolle über den elektrischen Antrieb kommt.

Durch diesen speziellen Notfall-Betrieb des elektrischen Antriebs in Form des stromabgebenden bzw. nicht-stromabgebenden Betriebszustandes im Falle eines Massebandabrisses kann somit sowohl verhindert werden, dass die Logikschaltung ihre Energieversorgung verliert, als auch dass an der Logikschaltung eine zu hohe, kritische Spannung anliegt.

In einer vorteilhaften Ausgestaltung der Erfindung wird die elektrische Maschine in dem stromabgebenden Betriebszustand zur Bereitstellung einer passiven Gleichrichtung angesteuert. Dabei werden der Stromrichter bzw. die elektrischen Schalter des Stromrichters nicht explizit angesteuert. Der Stromrichter umfasst dabei insbesondere MOSFETs, welche prinzipbedingt jeweils eine Inversdiode aufweisen. Werden die MOSFETs des Stromrichters nicht angesteuert, kann Strom über diese Inversdioden kommutieren. Die Inversdioden ergeben dabei eine Anordnung analog zu einem passiven Gleichrichter. Ohne Ansteuerung des Stromrichters wird dieser somit implizit als ein passiver Gleichrichter angesteuert.

Vorzugsweise wird die elektrische Maschine in dem stromabgebenden Betriebszustand derart angesteuert, dass eine Polradspannung in der elektrischen Maschine aufgebaut bzw. induziert wird. Die Polradspannung entspricht einer Spannung, die von einem Erregerstrom durch eine Läuferwicklung des Läufers in einer Statorwicklung der elektrischen Maschine induziert wird. Insbesondere wird der Stromrichter dabei als ein Hochsetzsteller angesteuert. Durch die Polradspannung entsteht eine zusätzliche Stromquelle. Somit kann das Bezugsmassepotential abgebaut werden.

Im Falle, dass die Polradspannung für einen Gleichrichtungsbetrieb zu niedrig ist, kann durch einen ständigen Wechsel zwischen Phasenkurzschluss und passiver Gleichrichtung (bspw. 8 kHz) hin und her geschaltet werden. Dadurch stellt sich ein rotorlageunabhängiger Aufwärtswandlereffekt ein, der einen generatorischen Betrieb herstellen kann.

In einer bevorzugten Ausgestaltung der Erfindung wird die elektrische Maschine in dem nicht-stromabgebenden Betriebszustand derart angesteuert, dass ein Phasenkurzschluss der elektrischen Maschine entsteht. Phasenanschlüsse der elektrischen Maschine werden dabei elektrisch miteinander verbunden. Insbesondere werden jeweilige Gleichspannungsanschlüsse der elektrischen Maschine dabei nicht elektrisch miteinander verbunden. Somit kann ein Stromfluss durch die elektrische Maschine unterbunden werden. Der Phasenkurzschluss kann dabei an high-side oder low-side Anschlüssen der elektrischen Maschine entstehen. Alternativ oder zusätzlich kann ein Tastgrad (duty cycle) von jeweils 50% für high-side Anschlüsse und low-side Anschlüsse gewählt werden.

Vorzugsweise wechselt die elektrische Maschine zum Stabilisieren eines erwünschten Potentials zwischen nicht-stromabgebenden und stromabgebenden Betriebszustand.

In einer vorteilhaften Ausgestaltung der Erfindung wird die Überprüfung der Massedifferenzspannung in einem regulären Betriebsmodus des elektrischen Antriebs durchgeführt. Tritt ein Massebandabriss ein, wenn die elektrische Maschine gerade im regulären Betriebsmodus generatorisch betrieben wird, wird das Bezugsmassepotential negativer. Eine Generatorspannung steigt somit an. Dies führt üblicherweise zu einem Auslösen von herkömmlichen Überspannungsschutzfunktionen. Parallel dazu wird ein zusätzlicher Schutz von der Erfindung erreicht, da die Massedifferenzspannung sinkt.

Tritt ein Massebandabriss jedoch ein, wenn die elektrische Maschine gerade im regulären Betriebsmodus motorisch betrieben wird, wird das Bezugsmassepotential positiver. Die Generatorspannung wird demgemäß geringer und die Massedifferenzspannung erhöht sich. Herkömmliche Überspannungsschutzfunktionen werden in diesem Fall nicht ausgelöst. Dies kann zu einer kritischen Spannung der Logikschaltung führen, was einen Reset und einen Verlust jeglicher Kontrolle über den elektrischen Antrieb zur Folge haben kann.

Durch die Überprüfung der Massedifferenzspannung im Sinne der Erfindung im regulären Betriebsmodus des elektrischen Antriebs wird somit sichergestellt, dass der elektrische Antrieb beim Verlust der elektrischen Masse stets in den sicheren Betriebsmodus überführt wird. Auch wenn die elektrische Maschine im regulären Betriebsmodus motorisch betrieben wird, kann frühzeitig erkannt werden, wenn es zu einem Massebandabriss kommt. Der elektrische Antrieb kann auch in diesem Fall in den sicheren Betriebsmodus überführt werden.

Durch die Erfindung kann ein Massebandabriss, wenn dieser während des motorischen oder des generatorischen Betriebs der elektrischen Maschine auftritt, effektiv und zuverlässig kompensiert werden. Darüber hinaus können für den Fall eines Massebandabriss im generatorischen Betrieb der elektrischen Maschine herkömmliche Überspannungsschutzfunktionen zusätzlich abgesichert und verbessert werden.

Vorzugsweise wird die Massedifferenzspannung mittels eines Sensorelements bestimmt. Das Sensorelement umfasst dabei insbesondere einen Messwiderstand. Erreicht die Massedifferenzspannung einen der Grenzwerte, kann das Sensorelement insbesondere eine Fehlermeldung ausgeben. Insbesondere wird diese Fehlermeldung von dem Sensorelement unmittelbar oder mittelbar (z.B. über ein übergeordnetes Steuergerät) an die Logikschaltung ausgegeben. Die Logikschaltung steuert daraufhin die elektrische Maschine in dem entsprechenden stromabgebenden oder nicht-stromabgebenden Betriebszustand an. Das Sensorelement kann dabei insbesondere jeweils einen Wert des Bezugsmassepotentials und des Referenzmassepotentials erfassen und diese miteinander vergleichen.

Alternativ oder zusätzlich kann die Massedifferenzspannung direkt erfasst, beispielsweise mittels eines entsprechenden Messwiderstands. Insbesondere kann mittels dieses direkt erfassten Werts der Massedifferenzspannung der von dem Sensorelement bestimmte Wert verifiziert werden. Somit kann nochmals überprüft werden, dass auch tatsächlich ein Massebandabriss aufgetreten ist, bevor der elektrische Antrieb in dem stromabgebenden bzw. nicht-stromabgebenden Betriebsmodus betrieben wird.

In einer bevorzugten Ausgestaltung wird ein erfindungsgemäßes Verfahren für ein Bordnetz eingesetzt, das neben dem elektrischen Antrieb noch wenigstens eine weitere elektrische Komponente, die insbesondere von einer eigenen Stromquelle versorgt wird, umfasst, die masseseitig mit dem Bezugsmassepotential verbunden ist. Bei der wenigstens einen weiteren elektrischen Komponente handelt es sich insbesondere um einen oder mehrere Aktuatoren, wie bspw. Kraftstoffinjektoren, die zum Betrieb der Brennkraftmaschine vorgesehen sind und somit masseseitig am Motorblock als Bezugsmassepotential angeschlossen sind. Damit kann das Bezugsmassepotential auch für diese weiteren Aktuatoren im Falle eines Massebandabrisses geregelt werden. Ein (Weiter-)Betrieb der Aktuatoren ist möglich.

Vorzugsweise wird für den Weiterbetrieb der Komponente bei einem Massebandabriss ein Stromkreis von der Komponente durch den elektrischen Antrieb zu einer Karosserie auf Referenzmassepotential hergestellt. Damit wird der weitere Betrieb dieser elektrischen Komponente ermöglicht und die Brennkraftmaschine kann weiterhin betrieben werden.

Eine erfindungsgemäße Recheneinheit, z.B. die beschriebene Logikschaltung, ist, insbesondere programmtechnisch, dazu eingerichtet, ein erfindungsgemäßes Verfahren durchzuführen. Ein erfindungsgemäßer elektrischer Antrieb weist eine elektrische Maschine mit Stromrichter und eine erfindungsgemäße Logikschaltung auf. Er eignet sich besonders vorteilhaft zur Verwendung in Kraftfahrzeugen.

Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Kurze Beschreibung der Zeichnungen
- Figur 1: zeigt schematisch ein Bordnetz mit einem elektrischen Antrieb einer Brennkraftmaschine, der dazu eingerichtet ist, eine Ausführungsform eines erfindungsgemäßen Verfahrens durchzuführen.
- Figur 2: zeigt schematisch ein Spannungsdiagramm, welches im Zuge einer bevorzugten Ausführungsform eines erfindungsgemäßen Verfahrens bestimmt werden kann.
- Figuren 3a - 3c: zeigen schematisch ein Bordnetz mit einem elektrischen Antrieb einer Brennkraftmaschine und einer weiteren elektrischen Komponente, das dazu eingerichtet ist, eine weitere Ausführungsform eines erfindungsgemäßen Verfahrens durchzuführen.
- Figur 4: zeigt schematisch ein Steuergerät zur Stromversorgung einer weiteren elektrischen Komponente gemäß Figuren 3a - 3c.

### Ausführungsform(en) der Erfindung

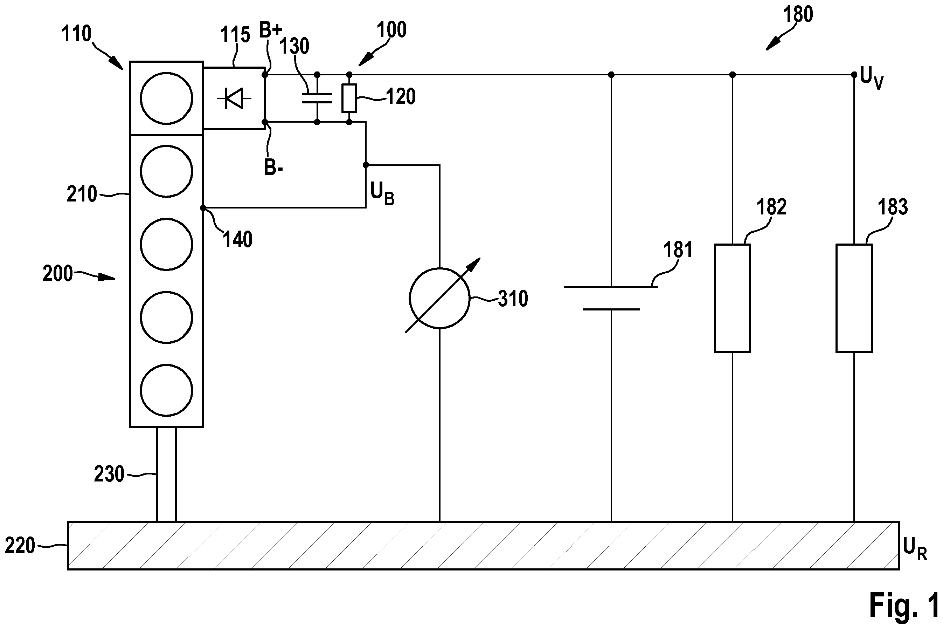

In Figur 1 ist ein elektrischer Antrieb schematisch dargestellt und mit 100 bezeichnet. Der elektrische Antrieb 100 ist mit einer Brennkraftmaschine 200 eines Kraftfahrzeugs verbunden. Der elektrische Antrieb 100 weist eine elektrische Maschine 110 auf, die sowohl generatorisch als auch motorisch betrieben werden kann. Die elektrische Maschine weist dazu u.a. einen Stromrichter 115 mit elektrischen Schaltern, insbesondere Halbleiterschaltern, auf. Der Stromrichter 115 der elektrischen Maschine 110 weist einerseits Gleichspannungsanschlüsse B+, B- für ein Bordnetz 180 und andererseits Wechselspannungsanschlüsse für die elektrischen Phasen der elektrischen Maschine auf.

Zur Ansteuerung der elektrischen Maschine 110, insbesondere des Stromrichters 115, weist der elektrische Antrieb eine Logikschaltung 120 auf. Parallel zu der Logikschaltung 120 ist ein Zwischenkreiskondensator 130 geschaltet.

Das Bordnetz 180 kann beispielsweise einen Energiespeicher 181 und elektrische Verbraucher 181, 182 aufweisen. Ein positives Potential des Bordnetzes 180 wird hier als Versorgungspotential U_{V} bezeichnet.

Der elektrische Antrieb 100 weist weiterhin einen Masseanschluss 140 auf. Der Masseanschluss ist insbesondere mit einem Motorblock 210 der Brennkraftmaschine 200 elektrisch verbunden. Der Motorblock 210 der Brennkraftmaschine 200 dient dabei als Erdung und somit als ein Bezugsmassepotential U_{B} des elektrischen Antriebs 100. Die Masseverbindung zwischen Motorblock 200 und elektrischem Antrieb 100 kann über ein Gehäuse der elektrischen Maschine 110 erfolgen.

Die elektrischen Komponenten 181, 182, 183 des Bordnetzes 180 sind mit einem Referenzpotential U_{R} verbunden. Das Referenzpotential U_{R} wird dabei durch eine Karosserie 220 des Kraftfahrzeugs gebildet. Um den Motorblock 210 der Brennkraftmaschine 200 und die Karosserie 220 auf dasselbe Massepotential zu beziehen, werden Motorblock 210 und Karosserie 220 über ein Masseband 230 miteinander verbunden.

Die Logikschaltung 120 ist dazu eingerichtet, die elektrische Maschine 110 anzusteuern. Die Logikschaltung 120 ist weiterhin dazu eingerichtet, eine bevorzugte Ausführungsform eines erfindungsgemäßen Verfahrens durchzuführen. Die Logikschaltung 120 bestimmt dabei eine Massedifferenzspannung zwischen Bezugsmassepotential U_{B} und dem Referenzmassepotential U_{R}. Insbesondere erfasst die Logikschaltung 120 die Massedifferenzspannung direkt mittels eines entsprechenden Messwiderstands 310. Die Logikschaltung 120 überwacht, ob die Massedifferenzspannung einen Grenzwert erreicht. Somit kann auf einen Massebandabriss geschlossen werden. Ein derartiger Massebandabriss bedeutet insbesondere, dass die Masseverbindung bzw. das Masseband 230 aufgrund eines Fehlers unterbrochen bzw. abgerissen ist.

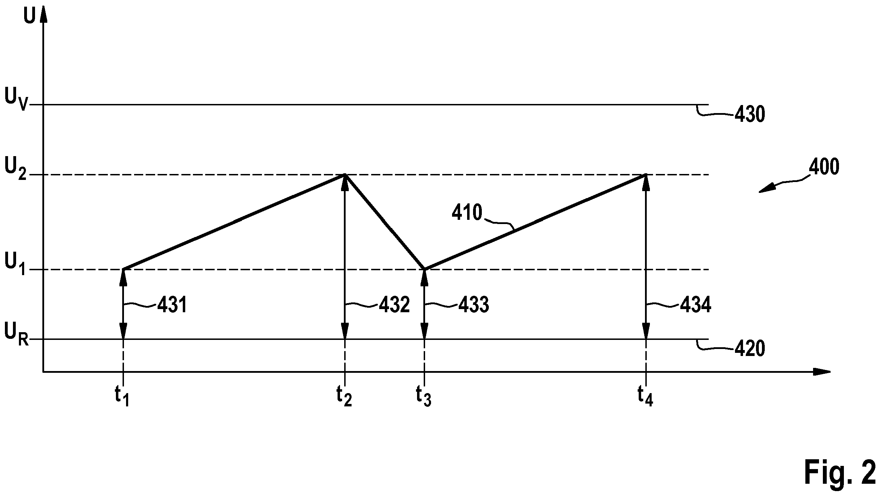

In Figur 2 ist ein Spannungsdiagramm 400 schematisch dargestellt. Das Spannungsdiagramm 400 kann von dem Steuergerät 300 im Zuge einer Ausführungsform des erfindungsgemäßen Verfahrens bestimmt werden.

Ein erster Spannungsverlauf 410 in dem Spannungsdiagramm 400 beschreibt dabei das Bezugsmassepotential über die Zeit. Ein zweiter Spannungsverlauf 420 beschreibt das Referenzmassepotential über die Zeit. Ein dritter Spannungsverlauf 430 beschreibt das Versorgungspotential über die Zeit.

Eine Differenz zwischen dem ersten und dem zweiten Spannungsverlauf 410 und 420 bildet die Massedifferenzspannung. Im Falle eines Massebandabrisses wird durch die Erfindung das Bezugsmassepotential 420 stabilisiert.

Zu einem Zeitpunkt t₁ nimmt die Massedifferenzspannung einen Wert 431 an, welcher einem unteren Grenzwert entspricht. Das Bezugsmassepotential erreicht dabei eine untere Schwelle U₁. Die Logikschaltung 120 steuert daraufhin die elektrische Maschine 110 in einem nicht-stromabgebenden Betriebszustand an. Dabei wird ein Phasenkurzschluss der elektrischen Maschine 110 erzeugt. Somit kann kein Strom die elektrische Maschine 110 verlassen. Die Logikschaltung 120 wird dabei durch den Zwischenkreiskondensator 130 mit elektrischer Energie versorgt, welcher sich dadurch entlädt. Das Bezugsmassepotential 420 kann sich dadurch erhöhen bzw. aufbauen und steigt in Richtung des Versorgungspotentials 430 an. Die Massedifferenzspannung erhöht sich dadurch.

Zu einem zweiten Zeitpunkt t₂ erreicht die Massedifferenzspannung einen Wert 432, welcher einem oberen Grenzwert entspricht. Das Bezugsmassepotential 420 erreicht dabei eine obere Schwelle U₂. Die Logikschaltung 120 steuert daraufhin die elektrische Maschine 110 in einem stromabgebenden Betriebszustand an, insbesondere im Zuge einer passiven Gleichrichtung. Die elektrische Maschine 110 wird dabei analog zu einem generatorischen Betriebszustand angesteuert. Die elektrische Maschine 110 wandelt dabei mechanische Energie in elektrische Energie um. Somit kann der Zwischenkreiskondensator 130 geladen werden und die Logikschaltung 120 wird mit elektrischer Energie versorgt. Das Bezugsmassepotential 420 kann sich daraufhin abbauen. Die Massedifferenzspannung verringert sich dadurch.

Zu einem Zeitpunkt t₃ nimmt die Massedifferenzspannung einen Wert 433 an, welcher wieder dem unteren Grenzwert entspricht. Die Logikschaltung 120 steuert daraufhin die elektrische Maschine 110 wieder in dem nicht-stromabgebenden Betriebszustand an, bis die Massedifferenzspannung zu einem Zeitpunkt t₄ einen Wert 434 annimmt, welcher wieder dem oberen Grenzwert entspricht.

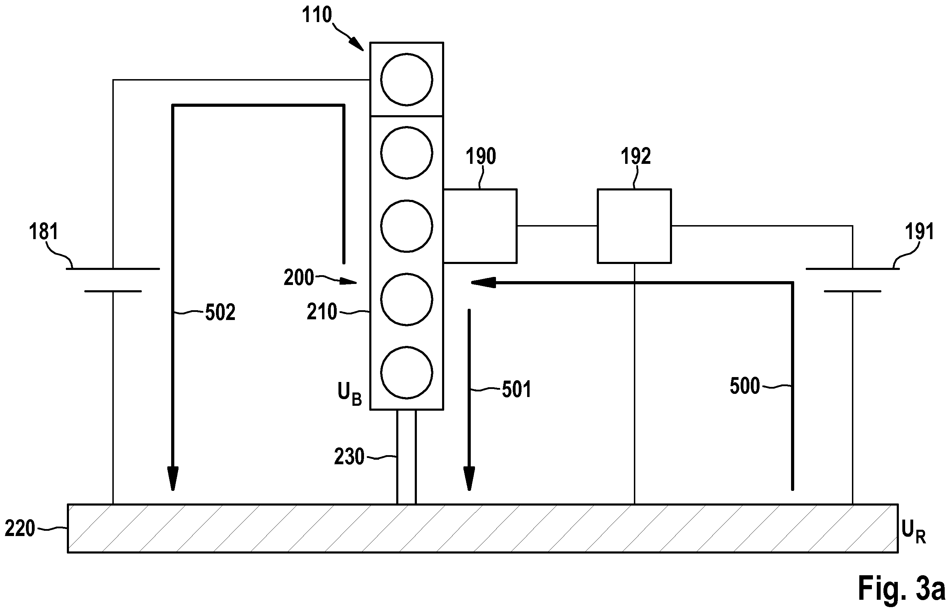

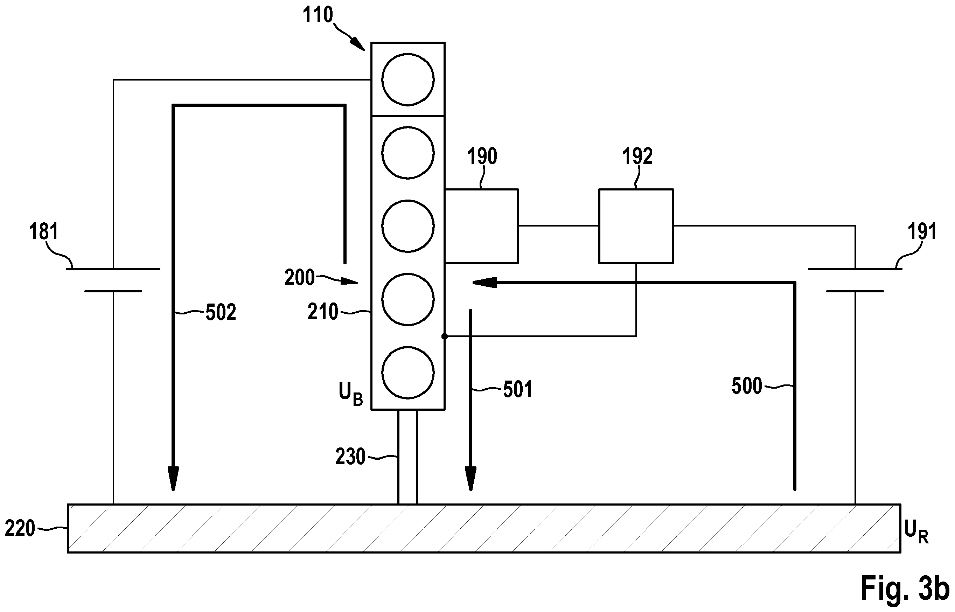

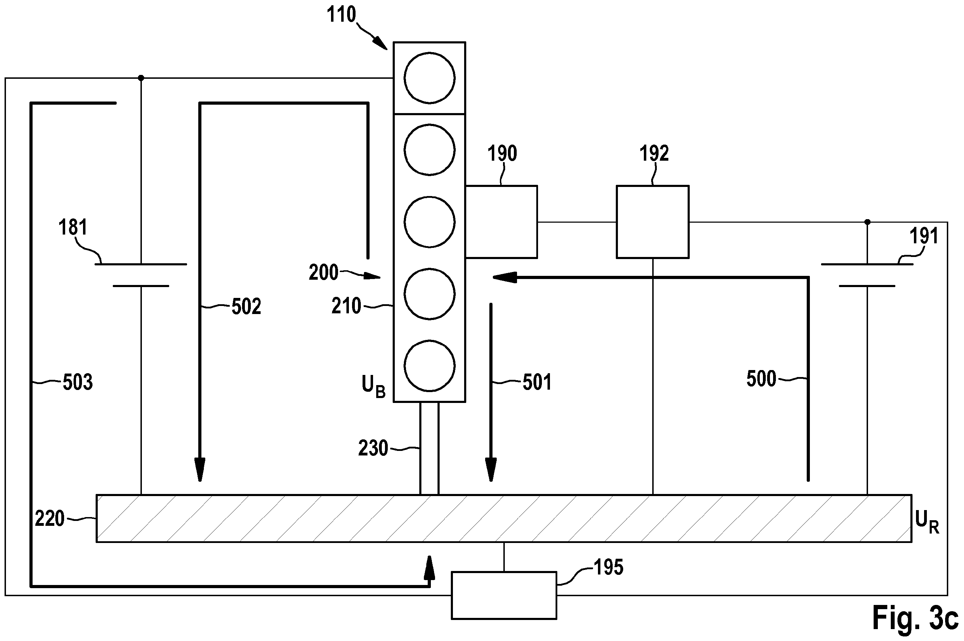

In den Figuren 3a, 3b und 3c ist schematisch das Bordnetz aus Figur 1 in einer vereinfachten Form mit der Brennkraftmaschine 200, der elektrischen Maschine 110 und der Karossiere 220 dargestellt. Zusätzlich ist eine als Aktuator 190 ausgebildete weitere elektrische Komponente dargestellt, der masseseitig eine elektrische Verbindung zum Motorblock 210 der Brennkraftmaschine 200 aufweist. Der Aktuator 190 wird spannungsseitig von einem Steuergerät 192 mit Strom versorgt. Das Steuergerät 192 wiederum wird hier von einer Stromquelle 191 mit Strom versorgt, kann alternativ jedoch ebenso von der elektrischen Maschine 110 bzw. von dem Energiespeicher 181 versorgt sein.

Das Steuergerät 192 kann masseseitig entweder, wie in Figur 3a dargestellt, mit der Karosserie verbunden sein, oder aber auch, wie in Figur 3b dargestellt, mit dem Motorblock 210. In Figur 3c ist der Fall aus Figur 3a gezeigt, wobei zusätzlich noch ein Gleichspannungswandler 195 vorhanden ist, welcher nötig ist, falls elektrische Maschine 110 bzw. Energiespeicher 181 und Aktuator 190 auf verschiedenen Spannungsniveaus, also verschiedenen Bordnetzspannungen, betrieben werden.

Der Aktuator 190 kann bspw. ein Kraftstoffinjektor sein, der für den Betrieb der Brennkraftmaschine 200 nötig ist. Üblicherweise sind mehrere solcher Aktuatoren vorhanden, die separat oder gemeinsam mit Strom versorgt werden. Der Übersichtlichkeit halber ist jedoch nur ein Aktuator 190 gezeigt.

Da der Aktuator 190 mit dem gleichen Bezugsmassepotential U_{B}, in diesem Falle dem Motorblock 210, wie die elektrische Maschine 110 verbunden ist, wird bei der Regelung des Bezugsmassepotentials über die Massedifferenzspannung auch das Bezugsmassepotential des Aktuators 190 geregelt.

Bei Normalbetrieb, d.h. intaktem Masseband 230, besteht eine elektrische Verbindung zwischen Bezugsmassepotential U_{B} und Referenzmassepotential U_{R}, d.h. zwischen Motorblock 210 und Karosserie 220. Ein Stromfluss durch den Aktuator 190 ist für diesen Fall mit den Pfeilen 500 und 501 angedeutet, welche von der Karosserie 220 über die Stromquelle 191, das Steuergerät 192, den Aktuator 190 und den Motorblock 210 über das Masseband 230 zurück zur Karosserie 220 führen.

Im Falle eines Massebandabrisses ist keine elektrische Verbindung zwischen Motorblock 210 und Karossiere 220 über das Masseband 230 mehr möglich. Der Stromfluss wird daher, wie mit den Pfeilen 500 und 502 angedeutet, von der Karossiere 220 über die Stromquelle 191, das Steuergerät 192, den Aktuator 190, den Motorblock 210, die elektrische Maschine 110 und den Energiespeicher 181 zurück zur Karossiere 220 geführt. Auf diese Weise kann der Aktuator 190 weiter mit Strom versorgt werden und der Betrieb der Brennkraftmaschine 200 aufrechterhalten werden, wenn dabei das Bezugsmassepotential U_{B} gemäß zuvor erläutertem Verfahren stabilisiert wird.

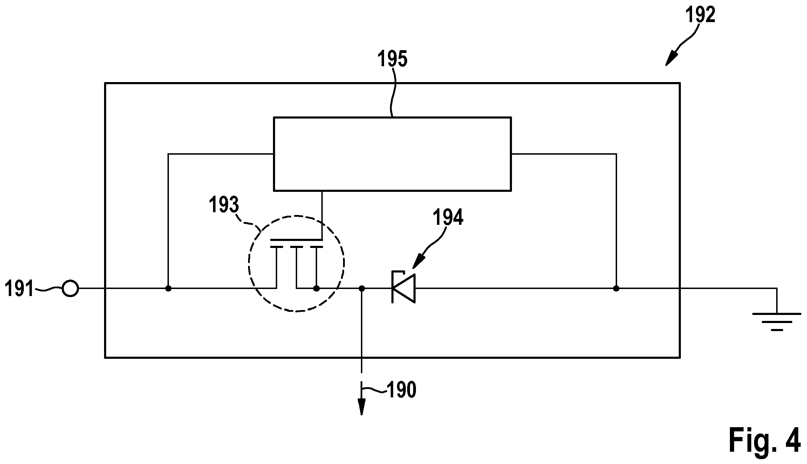

In Figur 4 ist schematisch das Steuergerät 192 vergrößert dargestellt. Dabei sind ein Schalter 193, über welchen eine Verbindung zwischen dem Aktuator 190 und der Stromquelle 191 hergestellt werden kann, und eine Freilaufdiode 194, über welche eine Verbindung zwischen Masse (entweder U_{B} oder U_{R}, je nach Ausführungsform) und Aktuator 190 besteht. Eine Logik des Steuergeräts ist mit 195 bezeichnet.

Bei Normalbetrieb wird der Aktuator 190, der üblicherweise eine Induktivität enthält (z.B. Magnetinjektor), über das Steuergerät 192 wie ein Abwärtswandler betrieben, d.h. wenn der Schalter 193 offen ist, ist ein Stromkreis durch den Aktuator 190 über die Freilaufdiode 194 vorhanden. Im Falle des Massebandabrisses ist dieser Freilaufbetrieb über die Freilaufdiode 193 nicht mehr möglich. Zweckmäßigerweise ist daher der Aktuator entsprechend ausgebildet, um den Freilaufstrom abzuführen, insbesondere über den Motorblock.

Der Aktuator ist zweckmäßigerweise auch dazu ausgebildet bzw. eingerichtet, einen Freilaufstrom abzuführen, wenn er sich in einem eingeschalteten, jedoch inaktiven Zustand befindet.

Im Falle eines Masseanschlusses des Steuergeräts 192 an die Karosserie 220 (also das Referenzmassepotential U_{R}), wie in den Figuren 3a und 3c, muss bei einer solchen Anordnung sichergestellt werden, dass das Bezugsmassepotential U_{B} nicht unter eine Durchbruchspannung (ca. -0,5V bzgl. U_{R}) der Freilaufdiode 194 fällt, d.h. der untere Grenzwert der Massedifferenzspannung wird hier in Abhängigkeit von dem Aktuator 190 vorgegeben.

Ebenso kann der Stromfluss nach der elektrischen Maschine 110 anstatt über den Energiespeicher 181 über den Gleichspannungswandler 195 zurück zur Karossiere 220 geführt werden, wie mit dem Pfeil 503 angedeutet.

## Patentansprüche

1. Verfahren zum Betreiben einer elektrischen Maschine (110) mit einem Stromrichter (115), die mit einem Bezugsmassepotential (U_{B}) elektrisch verbunden ist,
- wobei eine Massedifferenzspannung zwischen dem Bezugsmassepotential (U_{B}) des Stromrichters (115) und einem Referenzmassepotential (U_{R}) überwacht wird und
- **dadurch gekennzeichnet, dass** wenn die Massedifferenzspannung einen oberen Grenzwert erreicht, die elektrische Maschine (110) generatorisch betrieben wird, und
- wobei, wenn die Massedifferenzspannung einen unteren Grenzwert erreicht, die elektrische Maschine (110) derart betrieben wird, dass kein Stromfluss zwischen Gleichspannungsanschlüssen (B+, B-) des Stromrichters (115), dessen Wechselspannungsanschlüsse mit der elektrischen Maschine (110) verbunden sind, durch die elektrische Maschine (110) erfolgt, wobei ein mit dem Bezugsmassepotential (U_{B}) verbundener Zwischenkreiskondensator (130) derart geladen oder entladen werden kann, um das Bezugsmassepotential (U_{B}) zu verringern oder zu erhöhen.

2. Verfahren nach Anspruch 1, wobei die elektrische Maschine (110) in dem Betriebszustand, in dem kein Stromfluss zwischen Gleichspannungsanschlüssen (B+, B-) der elektrischen Maschine (110) durch die elektrische Maschine (110) erfolgt, motorisch betrieben wird.

3. Verfahren nach einem der vorstehenden Ansprüche, wobei der Stromrichter (115) der elektrischen Maschine in dem geneartorischen Betriebszustand zur Bereitstellung einer passiven Gleichrichtung angesteuert wird.

4. Verfahren nach einem der vorstehenden Ansprüche, wobei der Stromrichter (115) in dem geneartorischen Betriebszustand derart angesteuert wird, dass eine Polradspannung in der elektrischen Maschine (110) aufgebaut wird.

5. Verfahren nach einem der vorstehenden Ansprüche, wobei der Stromrichter (115) in dem Betriebszustand, in dem kein Stromfluss zwischen Gleichspannungsanschlüssen (B+, B-) der elektrischen Maschine (110) durch die elektrische Maschine (110) erfolgt, derart angesteuert wird, dass ein Phasenkurzschluss der elektrischen Maschine (110) erzeugt wird.

6. Verfahren nach einem der vorstehenden Ansprüche, wobei die Überprüfung der Massedifferenzspannung in einem regulären Betriebsmodus des elektrischen Antriebs durchgeführt wird.

7. Verfahren nach einem der vorstehenden Ansprüche, wobei die Massedifferenzspannung mittels eines Sensorelements bestimmt wird.

8. Verfahren nach einem der vorstehenden Ansprüche, wobei wenigstens eine weitere elektrische Komponente (190), die masseseitig mit dem Bezugsmassepotential (U_{B}) verbunden ist, betrieben wird.

9. Verfahren nach Anspruch 8, wobei der obere und/oder untere Grenzwert in Abhängigkeit von der wenigstens einen weiteren elektrischen Komponente (190) vorgegeben wird.

10. Verfahren nach Anspruch 8 oder 9, wobei für den Betrieb der wenigstens einen weiteren elektrischen Komponente (190) ein Stromkreis von der wenigstens einen weiteren elektrischen Komponente (190) durch die elektrische Maschine (110) zu einer Karosserie (220) eines Kraftfahrzeuges auf Referenzmassepotential (U_{R}) hergestellt wird.

11. Logikschaltung (120), die programmtechnisch dazu eingerichtet ist, das Verfahren nach einem der vorstehenden Ansprüche durchzuführen.

12. Elektrischer Antrieb (100) einer Brennkraftmaschine (200), aufweisend eine elektrische Maschine (110) mit einem Stromrichter (115) und eine Logikschaltung (120) nach Anspruch 11.

13. Computerprogramm, welches dazu eingerichtet ist, das Verfahren nach einem der Ansprüche 1 bis 10 durchzuführen.

14. Maschinenlesbares Speichermedium mit einem darauf gespeicherten Computerprogramm nach Anspruch 13.

## Claims

1. Method for operating an electric machine (110) comprising a converter (115), said electric machine being electrically connected to a reference-ground potential (U_{B}),
- wherein a ground differential voltage between the reference-ground potential (U_{B}) of the converter (115) and a ground reference potential (U_{R}) is monitored and
- **characterized in that**, when the ground differential voltage reaches an upper limit value, the electric machine (110) is operated by generator, and
- wherein, when the ground differential voltage reaches a lower limit value, the electric machine (110) is operated in such a way that no current flows through the electric machine (110) between DC voltage terminals (B+, B-) of the converter (115), the AC voltage terminals of which are connected to the electric machine (110), wherein an intermediate circuit capacitor (130) connected to the reference-ground potential (U_{B}) can be charged or discharged in such a way as to reduce or to increase the reference-ground potential (D_{B}).

2. Method according to Claim 1, wherein, in the operating state in which no current flows through the electric machine (110) between DC voltage terminals (B+, B-) of the electric machine (110), the electric machine (110) is operated by motor.

3. Method according to either one of the preceding claims, wherein, in the generator operating state, the converter (115) of the electric machine is actuated to provide passive rectification.

4. Method according to one of the preceding claims, wherein, in the generator operating state, the converter (115) is actuated in such a way that a synchronous internal voltage is built up in the electric machine (110).

5. Method according to one of the preceding claims, wherein, in the operating state in which no current flows through the electric machine (110) between DC voltage terminals (B+, B-) of the electric machine (110), the converter (115) is actuated in such a way that a phase short circuit of the electric machine (110) is produced.

6. Method according to one of the preceding claims, wherein the ground differential voltage is checked in a regular operating mode of the electric drive.

7. Method according to one of the preceding claims, wherein the ground differential voltage is determined by means of a sensor element.

8. Method according to one of the preceding claims, wherein at least one further electrical component (190), which is connected to the ground side of the reference-ground potential (U_{B}), is operated.

9. Method according to Claim 8, wherein the upper and/or lower limit value is prescribed depending on the at least one further electrical component (190).

10. Method according to Claim 8 or 9, wherein, for the operation of the at least one further electrical component (190), an electric circuit is produced from the at least one further electrical component (190) through the electric machine (110) to a body (220) of a motor vehicle at ground reference potential (D_{R}).

11. Logic circuit (120), which is configured in terms of program technology to carry out the method according to one of the preceding claims.

12. Electric drive (100) of an internal combustion engine (200), having an electric machine (110) comprising a converter (115), and a logic circuit (120) according to Claim 11.

13. Computer program, which is configured to carry out the method according to one of Claims 1 to 10.

14. Machine-readable storage medium comprising a computer program according to Claim 13 stored thereon.

## Revendications

1. Procédé pour faire fonctionner une machine électrique (110) comprenant un convertisseur statique (115) qui est relié électriquement à un potentiel de masse de référence (U_{B}),
- une tension différentielle de masse entre le potentiel de masse de référence (U_{B}) du convertisseur statique (115) et un potentiel de masse de référence (U_{R}) étant surveillée et
- **caractérisé en ce que** lorsque la tension différentielle de masse atteint une valeur limite supérieure, la machine électrique (110) fonctionne en régime de générateur et
- procédé selon lequel, lorsque la tension différentielle de masse atteint une valeur limite inférieure, la machine électrique (110) fonctionne de telle sorte qu'aucun flux de courant n'a lieu à travers la machine électrique (110) entre les bornes de tension continue (B+, B-) du convertisseur statique (115) dont les bornes de tension alternative sont reliées à la machine électrique (110), un condensateur de circuit intermédiaire (130) relié au potentiel de masse de référence (U_{B}) pouvant être chargé ou déchargé de manière à réduire ou à augmenter le potentiel de masse de référence (U_{B}).

2. Procédé selon la revendication 1, selon lequel la machine électrique (110) fonctionne en régime de moteur dans l'état opérationnel dans lequel aucun flux de courant n'a lieu à travers la machine électrique (110) entre les bornes de tension continue (B+, B-) de la machine électrique (110).

3. Procédé selon l'une des revendications précédentes, selon lequel le convertisseur statique (115) de la machine électrique dans l'état opérationnel de générateur est excité pour réaliser un redressement passif.

4. Procédé selon l'une des revendications précédentes, selon lequel le convertisseur statique (115) dans l'état opérationnel de générateur est excité de telle sorte qu'une force électromotrice synchrone est établie dans la machine électrique (110).

5. Procédé selon l'une des revendications précédentes, selon lequel le convertisseur statique (115), dans l'état opérationnel dans lequel aucun flux de courant n'a lieu à travers la machine électrique (110) entre les bornes de tension continue (B+, B-) de la machine électrique (110), est excité de telle sorte qu'un court-circuit de phase de la machine électrique (110) est produit.

6. Procédé selon l'une des revendications précédentes, selon lequel le contrôle de la tension différentielle de masse est effectué dans un mode de fonctionnement normal du groupe propulseur électrique.

7. Procédé selon l'une des revendications précédentes, selon lequel la tension différentielle de masse est déterminée au moyen d'un élément capteur.

8. Procédé selon l'une des revendications précédentes, selon lequel au moins un composant électrique (190) supplémentaire est utilisé, dont le côté masse est relié au potentiel de masse de référence (U_{B}).

9. Procédé selon la revendication 8, selon lequel la valeur limite supérieure et/ou inférieure est prédéfinie en fonction de l'au moins un composant électrique (190) supplémentaire.

10. Procédé selon la revendication 8 ou 9, selon lequel, pour le fonctionnement de l'au moins un composant électrique (190) supplémentaire, un circuit électrique de l'au moins un composant électrique (190) supplémentaire est établi à travers la machine électrique (110) vers une carrosserie (220) d'un véhicule automobile au potentiel de masse de référence (U_{R}).

11. Circuit logique (120) qui, du point de vue de la technique de programmation, est conçu pour mettre en oeuvre le procédé selon l'une des revendications précédentes.

12. Groupe propulseur électrique (100) d'un moteur à combustion interne (200), comprenant une machine électrique (110) munie d'un convertisseur statique (115) et d'un circuit logique (120) selon la revendication 11.

13. Programme informatique qui est conçu pour mettre en oeuvre le procédé selon l'une des revendications 1 à 10.

14. Support d'enregistrement lisible par machine sur lequel est enregistré un programme informatique selon la revendication 13.
